# EUROPEAN PATENT APPLICATION

(11) **EP 2 362 574 A1**
(43) Date of publication of application: **31.08.2011**
(21) Application number: 10154174.6
(22) Date of filing: 19.02.2010
(51) Int. Cl.: H04L 9/08, H04N 7/167

(54) **Key correspondence verification in device-smart card systems**

(71) Applicant: Irdeto B.V., 2132 HD Hoofddorp (NL)
(72) Inventor: Curtin, Bruce Victor, 2024 XB, Haarlem (NL); Hoogenboom, Ronaldus Petrus Johannes, 2377 DX, Oude Wetering (NL)
(74) Representative: van Looijengoed, Ferry Antoin Theodorus

(57) **Abstract**

The invention relates to a method and device for verifying correspondence of an encryption key between a smart card and an electronic device using a verification instance generated with the use of the key whose correspondence should be verified.. A first encryption key is stored in the smart card and a second encryption key is stored in the electronic device. In order to safely verify correspondence of the first and second encryption key on one side or on both sides of the device-smart card interface, the first encryption key is transformed to derive a transformed first encryption key in the smart card. The transformed first encryption key is transmitted to and received at the electronic device. The transformed first encryption key is de-transformed in the electronic device to derive the first encryption key in the electronic device. A step of verifying correspondence of the first encryption key and the second encryption key in the electronic device is then executed by comparing the stored second encryption key and the derived first encryption key in the electronic device enabling a check whether the keys on both sides of the interface correspond as expected.

## Description

### FIELD OF THE INVENTION

Generally, the invention relates to key correspondence verification in systems comprising an electronic device and a smart card. More particularly, the invention relates to verifying key correspondence of one or more keys in a pay television receiver and one or more keys in a smart card.

### BACKGROUND OF THE INVENTION

Conditional access systems for digital video broadcast (DVB) transmissions are well known and widely used in conjunction with pay television services. Such systems provide secure transmission of a broadcast stream comprising one or more services to a digital receiver contained for example in a set-top box or a mobile terminal supporting broadcast services. To protect the broadcast services from unauthorized viewing, the data packets are scrambled (encrypted) at the transmitter side with an encryption key commonly referred to as a control word. Further security is provided by periodically changing the control words so they are only valid for a certain period. Typically control words are transmitted in encrypted form to the receiver using so-called entitlement control messages (ECMs).

In the receiver an ECM is filtered out of a transport stream and sent to a secure computing environment, e.g. a smart card. The smart card subsequently decrypts the ECM using a higher-level key, which is common to all smart cards that are authorised to receive the TV channels associated with that key. The control word is returned to the receiver, which immediately loads the control word into the descrambler for descrambling data.

The transmission of control words from the smart card to the receiver is vulnerable to interception of the control word on the interface between the smart card and the receiver. Control word piracy is a significant problem in digital video broadcasting (DVB) systems. Sometimes attackers are able to intercept a control word that is transmitted from the smartcard to the receiver and redistribute it over local networks or over the internet. The redistributed control word is then used to descramble the scrambled services without a legitimate smartcard. In order to complicate control word piracy, it is known that the smart card and receiver use a chip set session key CSSK for encrypting the stream of control words on the interface between the smart card and the receiver.

Currently, the smart card is pre-provisioned with a unique serial number and a unique key and the chip set of the receiver is also pre-provisioned with a chip set serial number CSSN. Moreover, a chip set unique key CSUK is stored in a secured portion of the receiver, and CSSN and CSUK are linked. CSSN and CSUK cannot be changed after being provisioned in the receiver. Key CSUK is not stored in the smart card.

The establishment of the session key CSSK for data transfer between the smart card and the receiver is problematic to some extent. Before a customer can use a smart card - receiver combination, he or she is obliged to contact a party and provide information regarding the serial number of the smart card and the serial number of the chip set to this party. This information enables the contacted party to initiate the transmission of a message (typically an entitlement management message EMM) encrypted under the unique key of the smart card and containing the key CSSK and the key CSSK encrypted under the chip set unique key CSUK. The smart card receiving the encrypted message decrypts the message using the unique key of the smart card and now possesses the key CSSK. The smart card also loads the key CSSK encrypted under CSUK in the secured portion of the receiver, where it is decrypted using CSUK, such that CSSK is also available at the receiver. Subsequently, control words can be transferred over the interface from the smart card to the receiver, the control words being encrypted at the smart card and decrypted in the secured portion of the receiver under the obtained key CSSK.

This procedure is error-prone since correct communication of the information regarding the serial number of the smart card and the serial number of the chip set to the responsible party is not straightforward. As an example, the customer may incorrectly read or type one or more digits of the number(s) during communication with the responsible party. This may either result in the smart card being unable to decrypt the message to extract the chip set session key CSSK (if the serial number of the smart card is incorrect) or the receiver being unable to correctly decrypt the encrypted chip set session key CSSK (if the serial number of the chip set is incorrect).

In the latter case, however, the smart card is not aware of the fact that the receiver does not possess the correct key CSSK. As a result, control words transmitted under the key CSSK in the smart card can not be decrypted in the receiver and, consequently, encrypted content received by the receiver cannot be decrypted using the control words from the smart card.

Therefore, a need exists in the art to enable verification of key correspondence between an electronic device and a smart card. It should be noted that in order to verify key correspondence, the key CSSK cannot be transferred safely from the receiver to the smart card in encrypted form in the absence of a shared key (note again that CSUK is not known in the smart card).

### SUMMARY OF THE INVENTION

A method for verifying correspondence of an encryption key between a smart card and an electronic device is disclosed. A first encryption key is stored in the smart card and a second encryption key is stored in the electronic device.

Generally, key correspondence is verified by generating a verification instance in at least one of the smart card and the electronic device and analyzing the verification instance in the smart card and/or electronic device. The verification instance is obtained using the key to be verified.

The verification instance may e.g. be a transformed version of the key whose correspondence should be verified with another key at the other side of the interface.

Then, in order to safely verify correspondence of the first and second encryption key on one side or on both sides of the device-smart card interface, the first encryption key is transformed to derive a transformed first encryption key in the smart card. The transformed first encryption key is transmitted to and received at the electronic device as a verification instance. The transformed first encryption key is de-transformed in the electronic device to derive the first encryption key in the electronic device.

A step of verifying correspondence of the first encryption key and the second encryption key in the electronic device is then executed by comparing the stored second encryption key and the derived first encryption key in the electronic device enabling a check whether the keys on both sides of the interface correspond as expected.

Alternatively or in addition, in order to safely verify correspondence of the first and second encryption key, the second encryption key is transformed to derive a transformed second encryption key in the electronic device. The transformed second encryption key is transmitted to and received at the smart card as a verification instance. The transformed second encryption key is de-transformed in the smart card to derive the second encryption key in the electronic device.

A step of verifying correspondence of the first encryption key and the second encryption key in the smart card is the executed by comparing the stored first encryption key and the derived second encryption key in the smart card, enabling a check whether the keys on both sides of the interface correspond as expected.

A computer program or distributed set of programs comprising software code portions configured for performing this method, when executed by one or more processors, is also disclosed.

Furthermore, a smart card for use in combination with an electronic device is disclosed, wherein the electronic device stores a second encryption key. The smart card comprises:
- a memory storing a first encryption key;
- a receiving interface configured for receiving a transformed second encryption key from the electronic device; and
- a processor configured for de-transforming the transformed second encryption key to derive the second encryption key, wherein the processor is further configured for verifying correspondence between the stored first encryption key and the derived second encryption key.

Alternatively or in addition, a smart card for use in combination with an electronic device is disclosed, wherein the electronic device stores a second encryption key. The smart card comprises:
- a memory storing a first encryption key;
- a processor configured for transforming the first encryption key to derive a transformed first encryption key, and
- a transmission interface configured for transmitting the transformed first encryption key to the electronic device.

Still further, an electronic device for use in combination with a smart card is disclosed, wherein the smart card stores a first encryption key. The electronic device comprises:
- a memory storing a second encryption key;
- a receiving interface configured for receiving a transformed first encryption key from the smart card; and
- a processor configured for de-transforming the transformed first encryption key to derive the first encryption key, wherein the processor is further configured for verifying correspondence between the derived first encryption key and the stored second encryption key.

Finally, an electronic device for use in combination with a smart card is disclosed, wherein the smart card stores a first encryption key. The electronic device comprises:
- a memory storing a second encryption key;
- a processor configured for transforming the second encryption key to derive a transformed second encryption key, and
- a transmission interface configured for transmitting the transformed second encryption key to the smart card.

By storing corresponding transformation functions in the smart card and the electronic device, protected transmission of the encryption key(s) from one side of the interface for verification on the other side of the interface is enabled. This prevents adversaries to learn the key under which encrypted information (e.g. further keys or control words) is exchanged between the smart card and the electronic device, whereas correspondence of the keys can now be verified prior to transmitting data under the encryption key. If the keys do not correspond, a false key indication can be issued to a user device and/or to a head end.

Transform functions map the key to a transformed domain. This can be a special fixed functions.

It should be noted that the smartcard is typically a separate card that is or can be manually inserted into the receiver before operation. However, the smart card can also be an integrated part of the electronic device.

In an embodiment of the invention, at least one of the transformation and de-transformation operations at the side of the device is executed in a secured portion of the electronic device. In particular, the second encryption key may be stored in the secured portion of the electronic device. This may involve transforming the second encryption key in the secured portion of the electronic device and/or receiving the transformed first encryption key in the secured portion of the device and de-transforming the transformed first encryption key to derive the first encryption key in the secured portion of the device. Key correspondence verification can be executed in the secured portion of the device.

As used herein, a secured portion is a dedicated part of the electronic device containing hardware elements not allowing access by means of read/write operations of data from outside the secured portion and only allowing data transfer with non-secured portions of the receiver in encrypted form. An example of a secure portion is a secure crypto-engine. Functions realized in the secure portion are also generally implemented as hardware elements.

This embodiment allows secured transfer of the key directly into the secured portion of the device, thereby improving security since the de-transformed key is only available in the secured portion of the electronic device.

In an embodiment of the invention, the smart card receives an encrypted message (typically an EMM) from a head end. The encrypted message contains the first key CSSK1 and the second key CSSK2. The second key CSSK2 is encrypted under a device key, such as CSUK, of the electronic device. CSSK1 and CSSK2 should be corresponding keys. However, as explained in the background section, CSSK1 and CSSK2 may not correspond as a result of faulty input of the serial numbers of the smart card and/or the chip set of the electronic device. The first key, CSSK1, is stored at the smart card. The second key, CSSK2, is transmitted to the electronic device, where it is decrypted under the device key. Key correspondence is verified using transformation functions on both sides of the interface as explained above. When the correspondence verification finds that CSSK1 and CSSK2 do not correspond, a false key indication is issued and presented to the customer and/or the responsible party in order to allow new keys CSSK1 and CSSK2 to be used.

In an embodiment of the invention, the first encryption key and second encryption key are obtained by locally executing a key exchange algorithm between the smart card and the electronic device in response to operative connection. The correspondence of the thus obtained first and second encryption keys is verified using the transformation and de-transformation operations as explained above. The second encryption key may be stored in the secured portion of the electronic device.

The key exchange algorithm functionality, e.g. a Diffie-Hellman protocol, implemented in the electronic device and the smart card, enables the smart card and the electronic device to locally agree on a key once the smart card and the electronic device are brought into operative contact without the need for contacting another party. This key can be used for secure transfer of data (e.g. control words) between a smart card and a receiver by encryption under this key. By storing the key in a secured portion of the device, data from the smart card can be transferred, encrypted under the key, from the smart card directly into the secured portion of the electronic device without being exposed in unencrypted form in the non-secured portion(s) of the device. Since access to the secured portion of the device is virtually impossible, the key cannot be obtained from the device and data, such as control words, can be safely transferred to this secure portion under the key.

Key exchange algorithms are described in the book Applied Cryptography, ISBN0-471-12845-7, by Bruce Schneier. It should be acknowledged that the key exchange algorithm steps may be preceded by or combined with certificate verification steps between the smart card and the electronic device. As an example, Diffie-Helman public keys can be exchanged between the smart card and the secure device in combination with certificate verification steps.

It may be desired to change the key under which the data transfer between the smart card and the device is protected now and then. Changing the key may e.g. be invoked when the device/receiver is rebooted or the smart card is extracted from the device. Also, a head end may have provided instructions for cycling the key. Although the corresponding first and second encryption key obtained by executing the key exchange algorithm may be used for protecting data, such as control words, when transferred over the interface between the smart card and the device, the establishment of a new first and second keys by performing a key exchange algorithm may take some time (primarily because of the limited computing resources of the smart card). Therefore, in order to be able to change the key under which data is protected more rapidly, an embodiment of the invention defines that a further encryption key is generated in the smart card and transformed to derive a transformed further key. The transformed further key is transmitted to the electronic device. The transformed further key is de-transformed in the electronic device to derive the further key in the electronic device. Key data (e.g. control words) are encrypted under the further key in the smart card and transmitted to the electronic device, e.g. to a secured portion of the device, where the key data are decrypted using the further key. Encrypted content data may then be decrypted using the decrypted key data.

The generation of the further key in the smart card and the transfer of the further key to the electronic device enables rapid yet secure establishment of a new key under which data can be encrypted for transfer between the smart card and the electronic device. It should be appreciated that the further key may also be generated in the electronic device and then be transferred to the smart card using transformation and de-transformation.

In order to further improve security, a further embodiment of the invention comprises encrypting and decrypting the transformed further key under the first encryption key or second encryption key.

In an embodiment of the invention, a transformation function is applied for transforming the at least one first and second encryption key and a further transformation function is applied for transforming the further encryption key. The transformation function and further transformation function are different functions. Specific combinations of transformation functions in the device and the smart card may be useful for diversifying the device infrastructure in the field, e.g. using different combinations for different device manufacturers.

In an embodiment of the invention, the at least one first encryption key and second encryption key are first transformed using a particular transformation function. The transformation function may be changed in response to a change instruction to obtain a changed transformation function. Subsequently, the at least one first encryption key and second encryption key can be transformed with the changed transformation function. Changing transformation functions may improve security and allows restoring security once a particular transformation function has become public.

The embodiments are also applicable for verification instances obtained by mixing the key to be verified with some random number. The mixing and de-mixing may involve an encryption function. The key to be verified may either be used as the encryption key or as data to be encrypted under the random number.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a schematic illustration of a receiver - smart card combination operating according to a first embodiment of the invention;
FIG. 2 is a schematic illustration of a receiver - smart card combination operating according to a second embodiment of the invention;
FIG. 3 is a diagram schematically illustration a method according to a third embodiment of the invention;
FIG. 4 is a schematic illustration of a receiver - smart card combination operating according to a fourth embodiment of the invention;
FIG. 5 is a schematic illustration of a receiver- smart card combination according to FIG. 1, wherein another method for verifying key correspondence is shown; and
FIG. 6 is a schematic illustration of yet another embodiment of the invention.

### DETAILED DESCRIPTION OF THE DRAWINGS

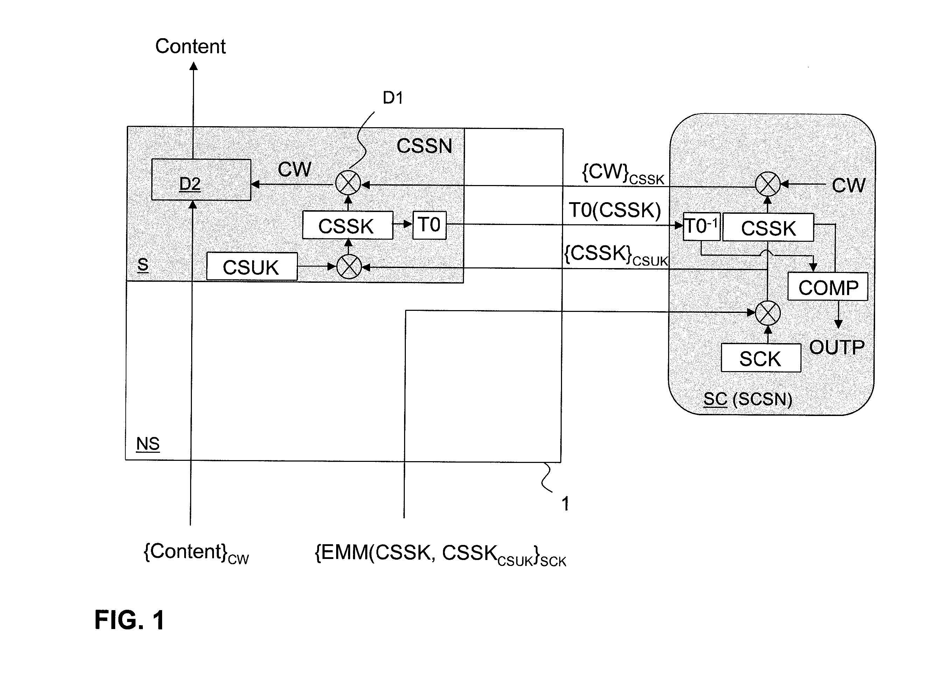

FIG. 1 shows a schematic illustration of an electronic device 1 and a smart card SC that can be brought into operative contact in a manner known as such. The electronic device 1 may e.g. be a receiver for a set-top box or a mobile phone. The smart card SC may e.g. be a dedicated smart card for insertion into the set-top box or a SIM card of a mobile phone.

Secured portions of the electronic device and the smart card SC are indicated in grey.

The smart card SC comprises a memory for securely storing a smart card key SCK and an encryption key CSSK, hereinafter also referred to as the first encryption key. The smart card has a smart card serial number SCSN that is linked to the smart card key SCK. The smart card SC is completely secured.

The electronic device 1 comprises a secured portion S and a non-secured portion NS. The secured portion S comprises a memory for secure storage of data, such as an encryption key CSSK, hereinafter also referred to as the second encryption key. The secured portion S also stores a chip set unique key CSUK. The electronic device 1 has a chip set serial number CSSN that is linked to the chip set unique key CSUK.

The non-secured portion NS comprises e.g. firmware of the device allowing external read/write operations. The non-secured portion NS may also comprise a processor with on-chip memory, allowing read/write operations on the on-chip memory by loading software in the processor.

The secured portion S is a dedicated part of the device 1 containing hardware elements not allowing access by means of read/write operations of data from outside the secured portion S and only allowing data transfer with non-secure portions NS of the receiver in encrypted form. An example of a secure portion S is a secure crypto-engine. Functions realized in the secure portion are also generally implemented as hardware elements.

Control words CW are obtained in the smart card SC in a manner known as such. The control words CW are used to decrypt content encrypted under the control word CW. As indicated in the background, it is desired to transfer control words CW in protected form from the smart card SC to the secured portion S of the device 1, e.g. by encryption under a session key CSSK as indicated.

The establishment of the session key CSSK for data transfer between the smart card SC and the secured portion S may be realized as follows. A customer desiring to operate the system contacts an external party and provides the serial number SCSN of the smart card SC and the serial number CSSN of the chip set to this party. This information enables the contacted party to initiate the transmission of an entitlement management message EMM encrypted under the key SCK of the smart card SC. The EMM contains the session key CSSK and the session key CSSK encrypted under the chip set unique key CSUK as illustrated in FIG. 1. The smart card SC receiving the EMM uses the smart card key SCK and stores the session key CSSK as a first encryption key. The smart card SC also loads the key CSSK encrypted under CSUK in the secured portion S of the receiver, where it is decrypted using CSUK, such that the session key can be stored in the memory at the receiver as a second encryption key.

Correct establishment of a session key CSSK is only obtained if both serial numbers SCSN and CSSN are correctly communicated to an input by the responsible party. Secure transfer of the control words CW from the smart card SC to the receiver 1 is only possible if the relation between the session keys CSSK in the smart card and in the receiver 1 is correct, e.g. if the first and second encryption keys are identical.

Verification of the key correspondence can be triggered by a request from the non-secured portion of the device 1. The initial trigger to send the request may be obtained from the smart card SC.

In order to verify correspondence of the first and second encryption keys CSSK on both sides of the system in a secure manner, the secured portion S of the receiver 1 comprises a processor configured for performing a transformation operation on the second encryption key CSSK stored in the memory. The transformation operation involves inputting CSSK in a transformation function T0 to derive a transformed second encryption key T0(CSSK). A transmission interface of the receiver 1 then transmits the transformed second encryption key CSSK to the smart card SC.

The smart card SC comprises a receiving interface configured for receiving the transformed second encryption key T0(CSSK) from the receiver. A processor in the smart card SC is configured for de-transforming the transformed second encryption key T0(CSSK) to derive the second encryption key CSSK. The processor is further configured, indicated by the comparison block COMP, for verifying correspondence between the first encryption key CSSK stored in a memory at the smart card SC and the thus received and derived second encryption key CSSK.

An output signal OUTP is triggered in dependence of the result of the key correspondence verification. In case the first and second encryption keys CSSK do not correspond, the output signal is a false key indication. The output signal may trigger informing the customer of the key fault via a rendering device. The output signal may, alternatively or in addition, be transmitted to the responsible party, indicating that a new EMM is required, possibly with alternative keys.

In case the first and second encryption key CSSK correspond as expected, the output signal may initiate transmitting control words CW under the encryption key CSSK, as it is now determined that both the smart card and the device 1 contain corresponding keys CSSK. In the secured portion S of device 1, the control words are decrypted using CSSK as stored in the memory in decrypter D1. The encrypted control words are fed to decrypter D2 for decrypting encrypted content data in a manner known as such. The decrypted content data is forwarded in the direction of a rendering device where the user can enjoy the content.

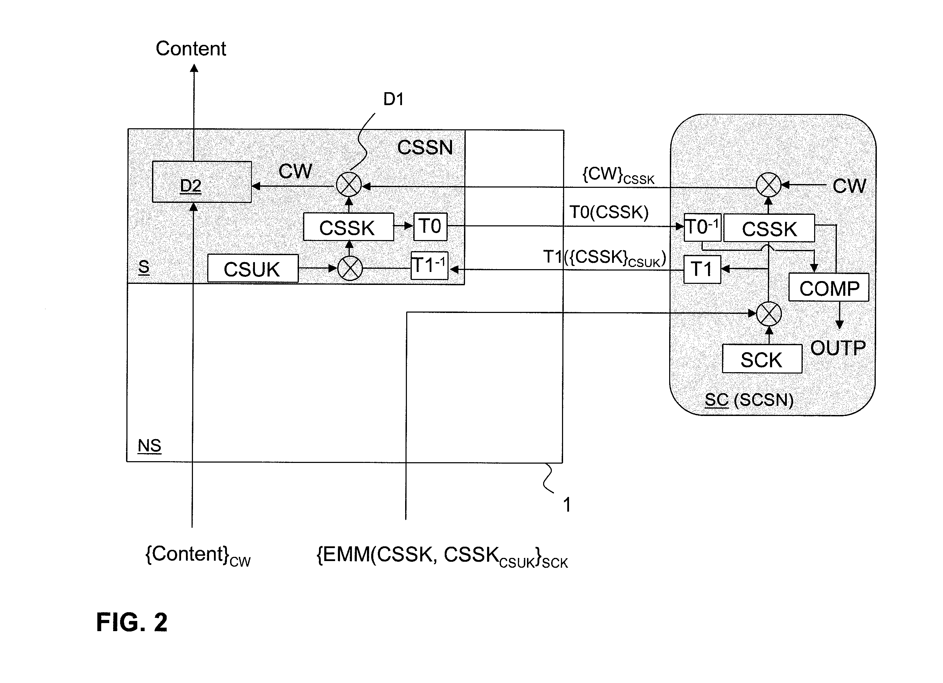

The embodiment of the invention as illustrated in FIG. 2 provides additional transformation functionality for transmitting the session key encrypted under CSUK as obtained from the external party via the EMM using a transformation function T1 in the smart card SC and a de-transformation function T1⁻¹ in the receiver. Using different T0 and T1 transformation functions in receivers 1 from different vendors enables diversifying the receiver infrastructure. A smart card SC may contain all transformation functions for the receivers it is configured to cooperate with.

Instead of receiving the session key from an external party, this embodiment involves obtaining a first encryption key and a second encryption key by locally executing a key exchange algorithm KEA between the smart card SC and the electronic device 1 in response to establishment of an operative connection between the smart card SC and the electronic device 1. Executing a local key exchange algorithm for establishing a key under which data transfer between the smart card SC and the electronic device 1 can be encrypted avoids the need for a customer to contact an external party and provide information regarding SCSN and CSSN. The key exchange algorithm KEA, however, may not execute properly, possibly by actions of a adversary, and therefore the first encryption key in the smart card SC and the second encryption key in the device 1 as obtained by executing the KEA may not correspond.

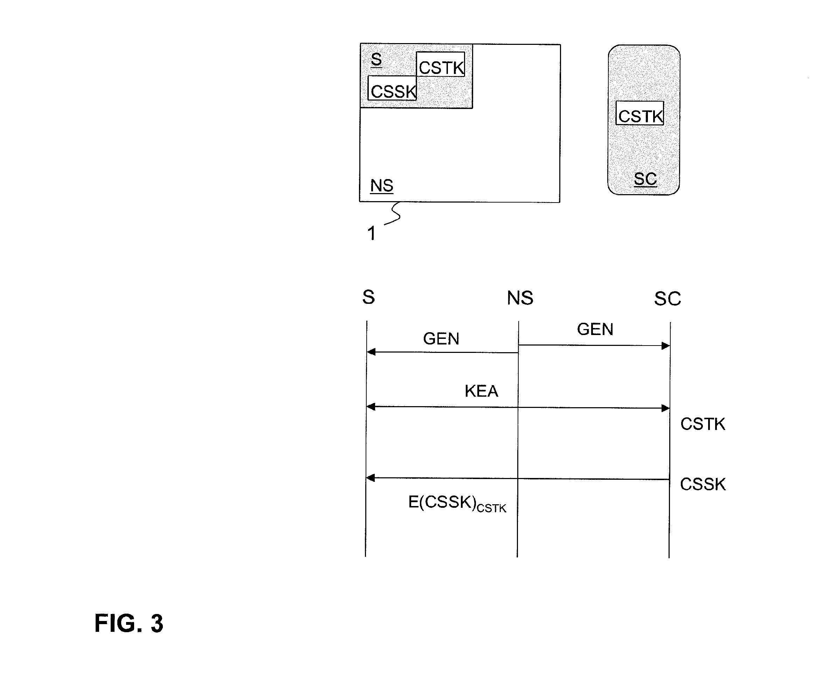

In FIG. 3, when the electronic device 1 and the smart card SC are brought in operative contact, the electronic device 1 detects the operative contact and signals GEN are issued, e.g. automatically, from the non-secured portion NS to the smart card SC and to the secure portion S to perform a key exchange algorithm KEA. Key exchange algorithms are described in the book Applied Cryptography, ISBNO-471-12845-7, by Bruce Schneier, incorporated in the present application by reference. Key exchange algorithms includes Diffie-Hellman (DH) algorithms, elliptic curve DH algorithms etc.

Signals GEN may be combined in a certification verification procedure and may load parameters and other data for use during the key exchange algorithm.

Part of the key exchange algorithm KEA may include the exchange of public keys for establishing a trust key CSTK between the secure portion S and the smart card SC. The public key exchange for establishing the trust key CSTK may be strengthened using further public-private key encryption techniques.

The KEA functionality implemented in the electronic device 1 and the smart card SC, enables the smart card SC and the electronic device 1 to locally agree on the trust key CSTK once the smart card SC and the electronic device 1 are brought into operative contact without the need for contacting an external party. The trust key CSTK can be used for secure data transfer between a smart card SC and a receiver 1, such as securely providing control words CW encrypted under the trust key CSTK. By storing the trust key CSTK in the secured portion S of the device 1, data from the smart card SC can be transferred, encrypted under the trust key CSTK, from the smart card SC directly into the secured portion S of the electronic device 1 without being exposed in unencrypted form in the non-secured portion NS of the device 1. Since external access to the secured portion S of the device 1 and to the smart card SC is virtually impossible, the trust key CSTK cannot be obtained from the device 1 and data, such as control words, can be safely transferred to this secured portion S under the trust key CSTK.

Now that the device 1 and the smart card SC have established a trust key, the smart card SC may generate a further key CSSK for the actual protection of the data as explained in the embodiment of FIGS. 1 and 2. If the smart card SC generates the further key CSSK, the trust key CSTK can be used for encrypting the further key CSSK by any known encryption algorithm E and send this further key CSSK to the secured portion S of the device 1 as shown in FIG. 3. In the secured portion S, the encrypted message can be decrypted using a decryption algorithm and the stored key CSTK in order to derive CSSK. From now on, data can be transferred under the further key CSSK with the same level of protection as under CSTK. Establishing CSSK is faster than establishing CSTK using the key exchange algorithm KEA, thereby facilitating more rapid CSSK key cycling for data encryption between the smart card SC and the secured portion S of device 1. Further key CSSK is also stored in memory of the secured portion S.

Of course, in an alternative embodiment, the further key CSSK is generated in the secured portion S and transferred to the smart card SC encrypted under the trust key CSTK.

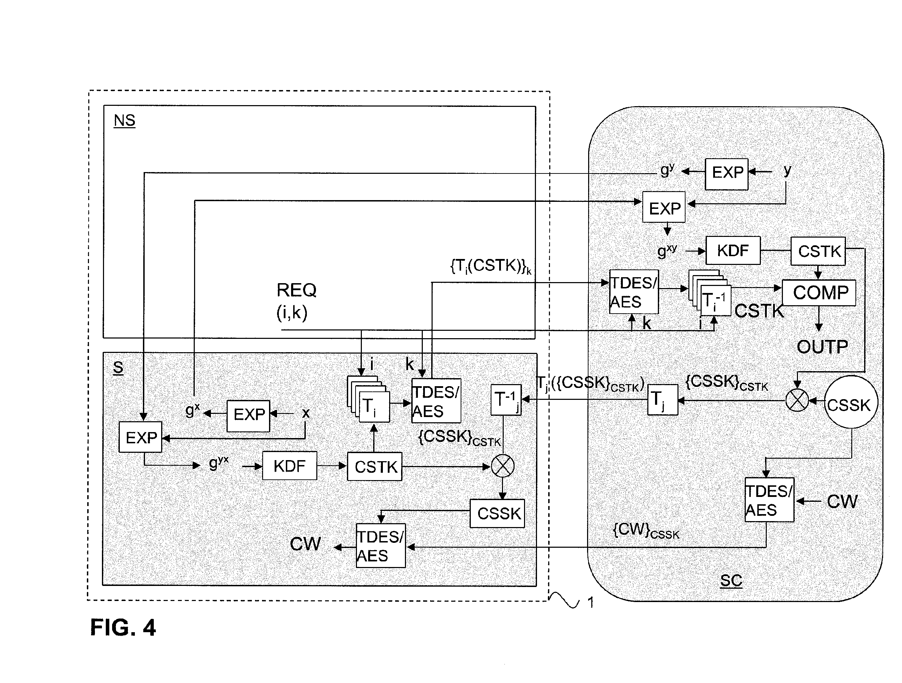

FIG. 4 is a schematic illustration of an implementation of the embodiment of FIG. 3, wherein a Diffie-Hellman (DH) protocol is applied as key exchange algorithm KEA and wherein transformation functions T are applied for verifying key correspondence relating to the DH established trust key CSTK. In the description, the modulo part of DH is ignored for clarity reasons. The DH protocol is completely performed within the secure portion S of the device 1 and in the smart card SC, i.e. entirely in the secure domain.

At the side of the device 1, a nonce x is generated in the secured portion S by a true random number generator after establishing operative contact between the smart card SC and the device 1. Furthermore, Diffie-Hellman parameter g is set as a large prime and a public key g^{x} is obtained. Public key g^{x} is transmitted to the smart card SC, possibly signed with a private key of the device 1.

At the side of the smart card SC, a nonce y is generated by a true random number generator after establishing operative contact with the device 1. Pre-personalised Diffie-Helman parameter g is applied and public key g^{y} is sent to the secured portion S of the device 1, possibly signed with a private key of the smart card SC.

Then, at both sides, the value g^{xy} or g^{yx} is calculated and a key derivation function KDF is applied to obtain the trust key CSTK. At the side of the device 1, the trust key CSTK is stored in the secure portion S. Data transfer between the smart card SC and the device 1 can now be encrypted under the trust key CSTK.

In order to verify correspondence of the thus established trust key CSTK in the smart card SC (the first encryption key) and the trust key CSTK in the device 1 (the second encryption key) a request REQ is received in the secured portion S of the device 1 and the smart card SC. Request REQ may originate from the non-secured portion NS of the device, e.g. by software running in the non-secured portion. The request REQ may contain a parameter i for indicating the transformation function T to be applied for verifying key correspondence and/or a key k for encryption of data transfer relating to the key verification process.

Whereas the embodiment of FIG. 4 illustrates the use of multiple (de-) transformation functions Tᵢ and the use of TDES/AES encryption and decryption under the key k, it should be noted that multiple transformation functions and encryption/decryption are not essential. The embodiment may operate using a single transformation function T0 and T0⁻¹ and does not require any encryption-decryption operation. Furthermore, the encryption-decryption operation may be implemented in the non-secured portion NS of the device using a white-box cryptographic implementation of TDES/AES. White box cryptography was described in "White-Box Cryptography and an AES Implementation", by Stanley Chow, Philip Eisen, Harold Johnson, and Paul C. Van Oorschot, in Selected Areas in Cryptography: 9th Annual International Workshop, SAC 2002, St. John's, Newfoundland, Canada, Aug. 15-16, 2002, and "A White-Box DES Implementation for DRM Applications", by Stanley Chow, Phil Eisen, Harold Johnson, and Paul C. van Oorschot, in Digital Rights Management: ACM CCS-9 Workshop, DRM 2002, Washington, D.C., USA, Nov. 18, 2002, and is incorporated by reference in the present application in its entirety. The basic idea of white-box cryptography is to hide a key, or a portion thereof, by obscuring the key or the portion thereof in lookup tables Lₙ. A sequence of lookup operations implements the function of a white box implementation module.

Returning now to the embodiment of FIG. 4, in order to verify correspondence of CSTK as obtained by the DH protocol, a request REQ (0,k) is received in the smart card SC and the device 1. In response to the request REQ, the second encryption key CSTK from the secured portion S is transformed using transformation function T0 to form T0(CSTK), the derived transformed second encryption key. The derived transformed second encryption key T0(CSTK) is then encrypted, resulting in {T0 (CST)}k which is then transmitted to the smart card SC. In the smart card SC, first a decryption operation is performed under key k as obtained in the request REQ to form a decrypted transformed second encryption key T0 (CSTK). The decrypted transformed second encryption key T0 (CSTK) is then de-transformed by applying transformation function T0⁻¹ to derive the second encryption key CSTK.

It should be noted that in the embodiment of FIG. 4, the request REQ containing the key k passes the non-secured portion NS and should therefore be assumed to be available to an adversary. The use of transformation function(s) Tᵢ, however, in the secured portion S of the device 1 and in the smart card, still enables secure transfer of the key despite the adversary's access to the request REQ.

The processor of the smart card SC is configured, indicated by the comparison block COMP, for verifying correspondence between the first encryption key CSTK stored in a memory at the smart card SC and the thus received and derived second encryption key CSTK.

An output signal OUTP is triggered in dependence of the result of the key correspondence verification. In case the first and second encryption keys CSTK do not correspond, the output signal is a false key indication. The output signal may trigger informing the customer of the key fault via a rendering device.

In case the first and second encryption key CSTK correspond as expected, the output signal may initiate generating a further key CSSK as shown in FIG. 4. The generation of the further key in the smart card and the transfer of the further key to the electronic device enables rapid yet secure establishment of a new key under which data can be encrypted for transfer between the smart card SC and the electronic device 1. It should be appreciated that the further key may also be generated in the electronic device and then be transferred to the smart card SC in a similar manner.

In the embodiment of FIG. 4, the generated further key CSSK in the smart card is encrypted under the trust key CSTK and then transformed using transformation function Tⱼ to derive a transformed encrypted further key Tⱼ ({CSSK}_{CSTK}). The transformed encrypted further key is transmitted to the smart card wherein a de-transformation Tⱼ⁻¹ may be executed followed by a decryption operation under CSTK to obtain CSSK in the secured portion S of the device 1. When CSSK is shared between the smart card SC and the device 1, control words CW obtained in the smart card SC can be transmitted from the smart card SC to the secured portion S of the device 1 as shown in FIG. 4. The control words CW can then be used for decrypting encrypted content data in the secured portion S in a similar manner as shown in FIG. 1.

It should be appreciated that the encryption and transformation steps can be reversed, both for the CSTK verification and for the CSSK further key transmission.

Whereas in the previous embodiments, key correspondence was verified by using transformation functions in the secured portion S of the device 1 and the smart card SC, key correspondence between a device and a smart card SC may be verified in an alternative manner by mixing a random number n generated in either the smart card SC or the device 1 with the key to be verified to obtain a verification instance and unmixing the verification instance at the other side using the random number n and the key to be verified.

In the embodiment of FIG. 4, correspondence of the trust key CSTK in the smart card SC and the secured portion S can be verified by omitting transformation function Tᵢ on both sides. A request REQ (n) could originate from either the smart card SC or the secured portion S of the device 1, n being a nonce. Nonce n can be encrypted using TDES/AES for encryption under key CSTK at one side to obtain a verification instance {n}_{CSTK}. The verification instance is transmitted to the other side of the interface between the device 1 and the smart card SC. Decryption of the verification instance can then be performed using TDES/AES using CSTK as a key. If the result of the decryption operation yields nonce n, the keys CSTK applied on both sides of the interface correspond.

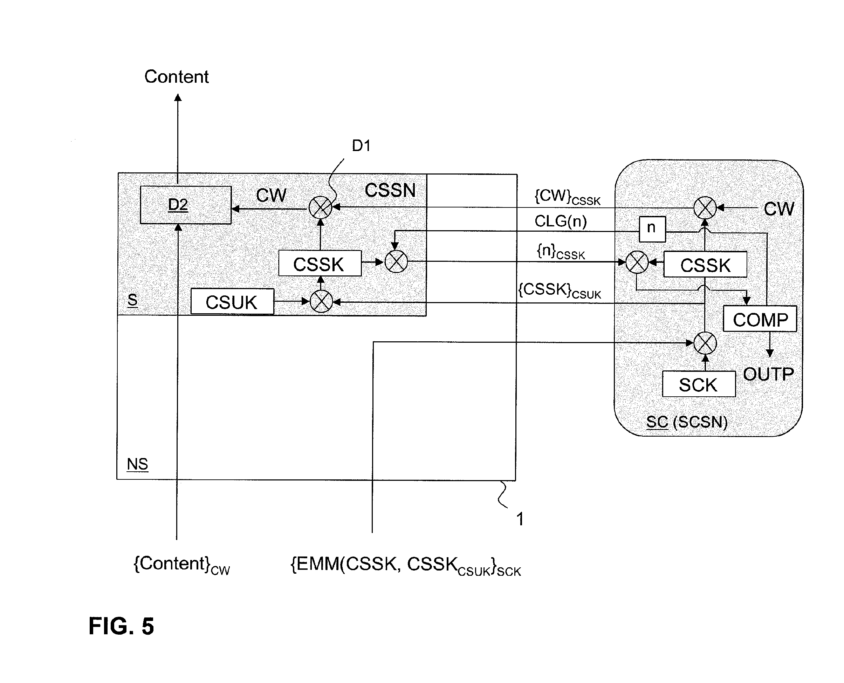

FIG. 5 is a schematic illustration of a receiver-smart card combination according to FIG. 1, showing the implementation of this alternative key correspondence verification approach.

Once key CSSK is stored in the smart card SC and in the secured portion S of the device 1 as described with reference to FIG. 1, correspondence of first and second encryption keys CSSK on both sides of the interface can be verified by issuing a challenge CLG containing a nonce n from the smart card SC to the secured portion S of the device 1. In the secured portion S of device 1, the nonce n is mixed with the second encryption key CSSK to yield a verification instance {n}_{CSSK}. The verification instance is returned to the smart card SC, where the first encryption key CSSK is applied for unmixing the verification instance. When the first and second encryption keys CSSK correspond, the same value of nonce n is obtained.

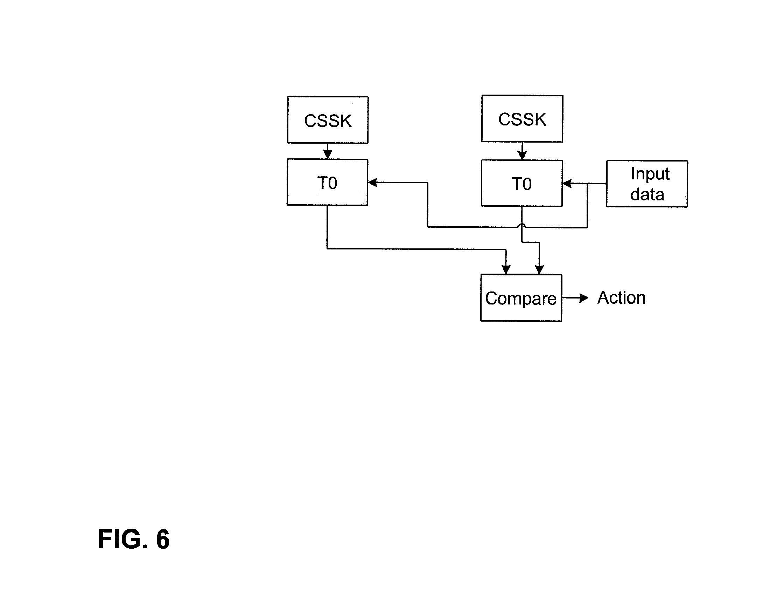

Key correspondence can also be verified by performing identical operations on identical data input in the smart card SC and the electronic device 1, followed by comparing whether the operation result is identical. This embodiment is illustrated in FIG. 6.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored.

## Claims

1. A method of verifying correspondence of an encryption key between a smart card and an electronic device, the method comprising the steps of:
- storing a first encryption key in the smart card;
- storing a second encryption key in the electronic device;
- transforming at least one of the first encryption key and the second encryption key to derive at least one of a transformed first encryption key in the smart card and a transformed second encryption key in the electronic device;
- transmitting at least one of the transformed first encryption key to the electronic device and the transformed second encryption key to the smart card;
- receiving at least one of the transformed first encryption key in the electronic device and the transformed second encryption key in the smart card;
- de-transforming at least one of the transformed first encryption key in the electronic device and the transformed second encryption key in the smart card to derive at least one of the first encryption key in the electronic device and the second encryption key in the smart card;
- verifying correspondence of the first encryption key and the second encryption key in at least one of the electronic device and the smart card by comparing at least one of the stored first encryption key and the derived second encryption key in the smart card and comparing the stored second encryption key and the derived first encryption key in the electronic device.

2. The method according to claim 1, wherein the electronic device comprises a secured portion, further comprising the steps of:
- storing the second encryption key in the secured portion of the electronic device;
- transforming the second encryption key in the secured portion of the electronic device;
- receiving the transformed first encryption key in the secured portion of the device;
- de-transforming the transformed first encryption key to derive the first encryption key in the secured portion of the device; and
- verifying correspondence between the stored second encryption key and the first encryption key in the secured portion of the device.

3. The method according to claim 1 or 2, further comprising the steps of:
- receiving an encrypted message from a head end in the smart card, the encrypted message containing the first encryption key and the second encryption key, the second encryption key being encrypted under a device key of the electronic device;
- decrypting the encrypted message and storing the first encryption key at the smart card;
- transmitting the second encryption key encrypted under the device key to the electronic device;
- decrypting the second encryption key using the device key and storing the device key at the electronic device.

4. The method according to claim 1 or 2, further comprising the steps of:
- establishing an operative connection between the smart card and the electronic device;
- obtaining the first encryption key in the smart card and the second encryption key in the electronic device by executing a key exchange algorithm between the smart card and the electronic device in response to the operative connection.

5. The method according to one or more of the preceding claims, wherein the electronic device receives encrypted content data, the method further comprising the steps of:
- generating a further encryption key in the smart card;
- transforming the further key in the smart card to derive a transformed further key;
- transmitting the transformed further key from the smart card to the electronic device;
- de-transforming the transformed further key in the electronic device to derive the further key;
- transmitting key data encrypted under the further key from the smart card to the electronic device, e.g. to a secured portion of the device;
- decrypting the encrypted key data received from the smart card using the further key;
- decrypting the encrypted content data in the electronic device, e.g. in a secured portion of the device, to obtain decrypted content data using the decrypted key data.

6. The method according to claim 5, further comprising the steps of:
- encrypting the further key or the transformed further key under the first encryption key in the smart card to obtain a transformed encrypted further key or an encrypted transformed further key;
- transmitting the transformed encrypted further key or the encrypted transformed further key from the smart card to the electronic device;
- receiving the transformed encrypted further key or the encrypted transformed further key in the electronic device;
- decrypting the encrypted further key or the encrypted transformed further key in the electronic device using the second encryption key corresponding to the first encryption key to obtain the further key or the transformed further key.

7. The method according to claim 5, wherein a transformation function is applied for transforming the at least one first and second encryption key and a further transformation function is applied for transforming the further encryption key, the transformation function and further transformation function being different functions.

8. The method according to one or more of the preceding claims, further comprising the steps of:
- transforming the at least one first encryption key and second encryption key with a transformation function; and
- changing the transformation function in response to a change instruction to obtain a changed transformation function;
- transforming the at least one first encryption key and second encryption key with the changed transformation function.

9. A computer program or set of programs comprising software code portions configured for, when executed by one or more processors, performing the method according to claims 1-8.

10. A smart card for use in combination with an electronic device, the electronic device storing a second encryption key, wherein the smart card comprises:
- a memory storing a first encryption key;
- a receiving interface configured for receiving a transformed second encryption key from the electronic device;
- a processor configured for de-transforming the transformed second encryption key to derive the second encryption key, wherein the processor is further configured for verifying correspondence between the first encryption key and the second encryption key.

11. A smart card for use in combination with an electronic device, the electronic device storing a second encryption key, wherein the smart card comprises:
- a memory storing a first encryption key;
- a processor configured for transforming the first encryption key to derive a transformed first encryption key, and
- a transmission interface configured for transmitting the transformed first encryption key to the electronic device.

12. The smart card according to claim 9 or 10 configured for use in the method according to claims 3-8.

13. An electronic device for use in combination with a smart card, the smart card storing a first encryption key, wherein the electronic device comprises:
- a memory storing a second encryption key;
- a receiving interface configured for receiving a transformed first encryption key from the smart card;
- a processor configured for detransforming the transformed first encryption key to derive the first encryption key, wherein the processor is further configured for verifying correspondence between the first encryption key and the second encryption key.

14. An electronic device for use in combination with a smart card, the smart card storing a first encryption key, wherein the electronic device comprises:
- a memory storing a second encryption key;
- a processor configured for transforming the second encryption key to derive a transformed second encryption key, and
- a transmission interface configured for transmitting the transformed second encryption key to the smart card.

15. The electronic device according to claim 12 or 13, wherein the device is further configured for use in the method according to claims 2-8.

16. A method of verifying correspondence of an encryption key between a smart card and an electronic device, the method comprising the steps of:
- storing a first encryption key in the smart card;
- storing a second encryption key in the electronic device;
- generating a verification instance using at least one of the first encryption key in the smart card and the second encryption key in the electronic device;
- transmitting the verification instance to at least one of the electronic device and the smart card;
- receiving the verification instance in at least one of the electronic device and the smart card;
- verifying correspondence of the first encryption key and the second encryption key on the basis of the verification instance, for example by comparing at least one of the stored first encryption key and the derived second encryption key in the smart card and comparing the stored second encryption key and the derived first encryption key in the electronic device.

17. The method according to claim 16, further comprising the steps of:
- transmitting at least one of a number from the smart card to the electronic device and a number from the electronic device to the smart card;
- generating the verification instance by mixing at least one of the number and the second encryption key in the electronic device and the number and the first encryption key in the smart card;
- verifying correspondence of the first encryption key and the second encryption key by de-mixing the verification instance in at least one of the smart card and the electronic device, using the number n transmitted from the at least one of the smart card and the electronic device.

18. The method according to claim 16, wherein a first verification instance is generated in the smart card using the first encryption key and the a data input and the a second verification instance is generated in the electronic device using the second encryption key and the data input and comparing correspondence of the first and second verification instance to verify correspondence of the first encryption key and the second encryption key.

19. A smart card for use in the method according to any one of claims 16-18.

20. An electronic device for use in the method according to any one of claims 16-18.
